Europäisches Patentamt

European Patent Office

Office européen des brevets

(11) Veröffentlichungsnummer : **0 038 020**
**B1**

(12) **EUROPÄISCHE PATENTSCHRIFT**

(45) Veröffentlichungstag der Patentschrift :
**20.08.86**

(21) Anmeldenummer : **81102656.6**

(22) Anmeldetag : **08.04.81**

(51) Int. Cl.⁴ : **G 01 F  1/72,  G 01 F  1/08,
G 01 F  9/00**

(54) **Flügelradmesser.**

(30) Priorität : **16.04.80 PL 223527**

(43) Veröffentlichungstag der Anmeldung :
**21.10.81 Patentblatt 81/42**

(45) Bekanntmachung des Hinweises auf die Patenterteilung : **20.08.86 Patentblatt 86/34**

(84) Benannte Vertragsstaaten :
**AT DE FR GB IT SE**

(56) Entgegenhaltungen :
**DE-A- 2 427 200
DE-B- 1 176 885**

(73) Patentinhaber : **Przemyslowy Instytut Automatyki i
Pomiarow "MERA-PIAP"
Al. Jerozolimskie 202
02-222 Warschau (PL)**

(72) Erfinder : **Kolodziejski, Stanislaw
ul. Borowej Gòry 6 m.25
Warszawa (PL)**
Erfinder : **Dwojak, Stanislaw
ul.Al. Niepodleglosci 120 m.16
Warszawa (PL)**
Erfinder : **Grabowski, Andrzej
ul. Myszkowska 2 m.1
Warszawa (PL)**

(74) Vertreter : **Hoffmann, Klaus, Dr. rer. nat. et al
Hoffmann . Eitle & Partner Patentanwälte Arabellastrasse 4
D-8000 München 81 (DE)**

Jouve, 18, rue St-Denis, 75001 Paris, France

EP 0 038 020 B1

**Beschreibung**

Die Erfindung betrifft einen Flügelradmesser nach dem Oberbegriff von Patentanspruch 1.

Die Flügelradmesser, in welchen das Flügelrad in der Flügelradkammer angeordnet ist, welcher die Flüssigkeit zugeführt wird, deren Durchflußmenge gemessen werden soll, sind gegen Flüssigkeitsstrahlpulsationen sehr empfindlich. Derartige Schwankungen in der zeitlichen Durchflußmenge beeinflussen beträchtlich die Genauigkeit des Durchflußmessers. Besonders starke Pulsationen kommen in den Speisesystemen für Verbrennungsmotoren vor. Zur Zeit werden zwei Speisesysteme für Verbrennungsmotoren angewandt. Die meist verwendeten Speisesysteme sind überlauffreie Systeme, in welchen der Überschuß des durch die Kraftstoffpumpe zugeführten Kraftstoffs in den Leitungen zwischen der Pumpe und dem Vergaser verbleibt. Die Messung der Durchflußmenge der Flüssigkeit in solchem System mittels Durchflußmessern, in welchen die Flüssigkeit unmittelbar der Flügelradkammer zugeführt wird, ist mit beträchtlichen Fehlern belastet. Ein anderes zur Zeit angewendetes Speisesystem für Verbrennungsmotoren ist ein System mit Überlauf, in welchem der Überschuß am durch die Kraftstoffpumpe zugeführten Kraftstoff zu einem Sammelbehälter abgeführt wird. In diesen immer breiter in den modernen Kraftfahrzeugen angewandten Systemen werden in der den Kraftstoffüberschuß abführenden Leitung Querschnittsverjüngungen angeordnet. Dadurch wird die Pulsation des Flüssigkeitsstrahles vermindert und somit die Meßgenauigkeit der Flüssigkeitsdurchflußmenge erhöht. Jedoch ist diese dank der Querschnittsverjüngung in der den Flüssigkeitsüberschuß abführenden Leitung erreichte Genauigkeitserhöhung nicht vollkommen befriedigend. Beträchtliche Fehler, mit welchen die Messungen der Flüssigkeitsdurchflußmenge in den Speisesystemen für Verbrennungsmotoren behaftet sind, bewirken, daß auch die zur Zeit angewandten Einrichtungen zur Messung der durch den Verbrennungsmotor verbrauchten Kraftstoffmenge, und insbesondere die Einrichtungen zur Messung des Momentan-Kraftstoffverbrauches pro Einheit des zurückgelegten Weges mit einem beträchtlichen Fehler belastet sind und deshalb den Charakter von Anzeigen und nicht von Meßgeräten haben. Aus diesen Gründen haben sie in Kraftfahrzeugen keine Anwendung gefunden, obwohl die Notwendigkeit eines rationellen Einsatzes von Kraftstoffen eine stetige Kontrolle der durch die Verbrennungsmotoren verbrauchten Kraftstoffmenge erforderlich macht.

Es ist daher das Ziel der Erfindung, einen Flügelradmesser der im Oberbegriff von Patentanspruch 1 genannten Art zu schaffen, der die beschriebenen Nachteile nicht aufweist und der eine genaue Messung und Anzeige der Durchflußmengen gestattet. Erfindungsgemäß wird dieses Ziel durch einen Flügelradmesser der genannten Art erreicht, der sich durch die im kennzeichnenden Teil von Patentanspruch 1 genannten Merkmale auszeichnet. Zweckmäßige Weiterbildungen sind in den abhängigen Ansprüchen beschrieben.

Dank dem Einsatz der Vorkammer ist die Flüssigkeitsdurchflußstärkemessung mit hoher Genauigkeit möglich. Es ist dadurch bewirkt, daß in der Kammer der Flüssigkeitsstrahl vorberuhigt und seine Pulsation vollkommen gelöscht wird.

Der Erfindungsgegenstand wird nachstehend anhand eines in der Zeichnung dargestellten Ausführungsbeispieles näher erläutert. In der Zeichnung zeigen

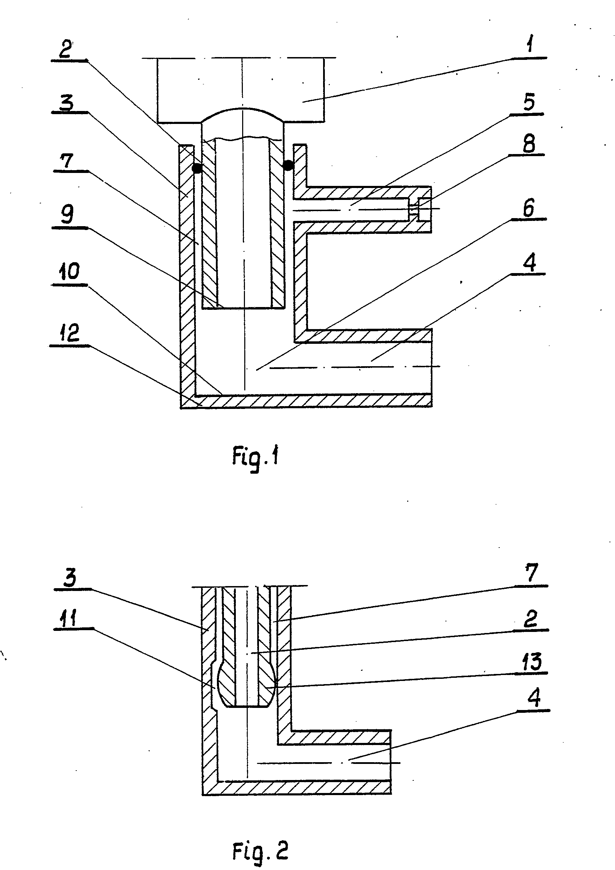

Figur 1 einen erfindungsgemäßen Flügelraddurchflußmesser im Längsschnitt, und

Figur 2 einen Ausschnitt des Durchflußmessers mit dem Feststellring auf der Saugleitung der Flügelradkammer, gleichfalls im Längsschnitt.

Der Flügelradmesser weist eine Flügelradkammer 1 auf, in welcher das nicht dargestellte Flügelrad untergebracht ist. Die Flügelradkammer 1 weist eine Ansaugleitung 2 auf, welche mit der Kammer 1 einteilig ausgebildet sein kann. Auf der Ansaugleitung 2 koaxial damit ist dicht und drehbar die Vorkammer 3 angeordnet, welche die Zuleitung 4 und die Ableitung 5 aufweist, die im Bereich des Ringspaltes 7 angeordnet ist, der zwischen der Innenwand der Vorkammer 3 und der Außenwand der Ansaugleitung 2 der Flügelradkammer 1 gebildet ist. In der Ableitung 5 ist eine Querschnittsverjüngung 8 vorgesehen. Zwischen dem Boden 10 der Vorkammer 3 und der Stirnfläche 9 der Ansaugleitung 2 ist ein Raum 6 gebildet, in dessen Bereich die Ansaugleitung 4 angeordnet ist, und welchem die Flüssigkeit zugeführt wird, deren Durchflußmenge gemessen werden soll. Die Ansaugleitung 4 und die Ableitung 5 der Vorkammer 3 liegen in verschiedenen, längs der Achse der Vorkammer 3 versetzten zu dieser Achse senkrechten Ebenen. Die Zuleitung 4 kann in der Stirnwand 12 der Vorkammer 3 angeordnet sein. Die Ansaugleitung 2 der Flügelradkammer 1 kann mit einem Feststellring 13 versehen werden, dessen Außendurchmesser gleich dem Innendurchmesser der Vorkammer 3 ist. In diesem Falle sind an der Berührungsstelle der Außenfläche des Feststellringes 13 und der Innenfläche der Vorkammer 3, in der Innenwand der letzteren die Aussparungen 11 ausgeführt, welche die Flüssigkeitsströmung ermöglichen. Die Aussparungen können auch in dem Feststellring 13 ausgeführt werden.

Die Flüssigkeit wird über die Zuleitung 4 dem Raum 6 der Vorkammer 3 zugeführt. In diesem Raum wird der Flüssigkeitsstrahl beruhigt und die Pulsation gelöscht. Ein Teil des Flüssigkeitsstrahles wird über die Ansaugleitung 2 der Flügelradkammer 1 zugeführt, wo sie das Flügelrad antreibt ; dann wird zum Verbraucher, z. B. dem Vergaser eines Verbrennungsmotors, abgeleitet. Der durch den Empfänger nicht entnommene Flüssigkeitsstrahlteil wird durch den Ringspalt 7 und die Ableitung 5 zum Speicher abgeleitet.

Wie die Untersuchungen nachgewiesen haben, ist die Messung der Durchflußmenge mittels des erfindungsgemäßen Flügelradmessers durch sehr hohe Genauigkeit gekennzeichnet.

Aus diesem Grunde finden derartige Durchflußmengenmesser Einsatz zur Messung und Abrechnung der von Verbrennungsmotoren von Kraftfahrzeugen sowie von stationären Motoren verbrauchten Kraftstoffmenge.

**Patentansprüche**

1. Flügelradmesser zur Messung der durch eine Leitung strömenden Menge einer Flüssigkeit, insbesondere zur Messung der Durchflußmenge des in einen Verbrennungsmotor eingespeisten Kraftstoffes mit

einer von der Flüssigkeit durchströmten Flügelradkammer (1), welche eine Zuleitung (2) und eine Ableitung für die Flüssigkeit aufweist,

einem in der Flügelradkammer angeordneten Flügelrad,

einer Schaltung zur Umsetzung der Drehzahl des Flügelrades in ein der Durchflußmenge der Flüssigkeit proportionales Signal, dadurch gekennzeichnet, daß

der Flügelradkammer (1) eine Vorkammer (3) vorgeordnet ist, welche ebenfalls eine Zuleitung (4) und eine Ableitung (5) für die Flüssigkeit besitzt,

die Zuleitung der Flügelradkammer (1) als in die Vorkammer (3) hineinragender Rohrstutzen (2) ausgebildet ist, welcher flüssigkeitsdicht unter Bildung eines Ringspaltes (7) zwischen seiner Außenwand und der Innenwand der Vorkammer in diese eingesetzt ist,

die Ableitung (5) der Vorkammer (3) von dieser im Bereich des Ringspaltes (7) abzweigt.

2. Flügelradmesser nach Anspruch 1, dadurch gekennzeichnet, daß die Mündungen der Zuleitung (4) und der Ableitung (5) der Vorkammer (3) in diese Kammer in Strömungsrichtung gesehen gegeneinander versetzt sind und die Zuleitung (4) im Bereich des zwischen der Stirnfläche (9) des Rohrstutzens (2) und einer Wand (10) der Vorkammer (3) gebildeten Raumes angeordnet ist.

3. Flügelradmesser nach Anspruch 1, dadurch gekennzeichnet, daß in der Ableitung (5) der Vorkammer (3) eine Querschnittsverjüngung (8) vorgesehen ist.

4. Flügelradmesser nach Anspruch 1, dadurch gekennzeichnet, daß die Vorkammer (3) auf dem Rohrstutzen (2) drehbar angeordnet ist.

5. Flügelradmesser nach Anspruch 1, dadurch gekennzeichnet, daß die Zuleitung (4) der Vorkammer (3) in einem der Eintrittsöffnung des Rohrstutzens (2) gegenüberliegenden Wandbereich (12) der Vorkammer (3) untergebracht ist.

6. Flügelradmesser nach Anspruch 1, dadurch gekennzeichnet, daß die Ansaugleitung (2) der Flügelradkammer (1) einen Feststellring (13) aufweist, dessen Außendurchmesser gleich dem Innendurchmesser der Vorkammer (3) ist, und daß im Bereich der Berührungsstelle zwischen der Außenfläche des Feststellringes (13) und der Innenwand der Vorkammer (3) die Flüssigkeitsströmung ermöglichende Aussparungen (11) entweder in dieser Innenwand oder in dem Feststellring ausgeführt sind.

7. Flügelradmesser nach Anspruch 1, dadurch gekennzeichnet, daß die Flügelradkammer (1) und der Rohrstutzen (2) einteilig ausgebildet sind.

**Claims**

1. A vane-type meter for measuring the amount of a fluid flowing through a conduit, especially for measuring the volumetric flow of the fuel fed to an internal-combustion engine, comprising,

an impeller chamber (1) which has an inlet (2) and an outlet for the fluid and through which the fluid flows,

an impeller arranged in the impeller chamber, circuit means for converting the rotation of the impeller into a signal which is proportional to the volumetric flow of the fluid, characterised in that

an ante-chamber (3) is positioned in advance of the impeller chamber (1), said ante-chamber likewise having an inlet (4) and an outlet (5) for the fluid,

the inlet to the impeller chamber (1) is formed as a tubular member (2) which projects in fluid-tight sealed manner into the ante-chamber (3) in such manner as to define an annular gap (7) between the external wall of the tubular member and the internal wall of the ante-chamber, the outlet (5) of the ante-chamber (3) branches off from the ante-chamber in the region of the annular gap (7).

2. A vane-type meter according to claim 1, characterised in that the mouths of the inlet (4) to and of the outlet (5) from the ante-chamber (3) are offset relative to one another in the ante-chamber viewed in the direction of current flow, and the inlet (4) is arranged in the region of the chamber formed between the end face (9) of the tubular member (2) and a wall (10) of the ante-chamber (3).

3. A vane-type meter according to claim 1, characterised in that in the outlet (5) from the ante-chamber (3) there is provided a zone (8) of reduced cross-sectional flow area.

4. A vane-type meter according to claim 1, characterised in that the ante-chamber (3) is arranged to be rotatable on the tubular member (2).

5. A vane-type meter according to claim 1, characterised in that the inlet (4) to the ante-chamber (3) is accommodated in a wall zone (12) of the ante-chamber (3) which lies below the inlet opening of the tubular member (2).

6. A vane-type meter according to claim 1, characterised in that the suction inlet (2) of the impeller chamber (1) includes a restriction ring (13) having an external diameter which is the same as the internal diameter of the ante-chamber (3), and in that in the region of contact between the external surface of the restriction ring (13) and the internal wall of the ante-chamber (3) recesses (11) to permit the flow of fluid are provided either in this internal wall or in the restriction ring.

7. A vane-type meter according to claim 1, characterised in that the impeller chamber (1) and the tubular member (2) are formed in one piece.

## Revendications

1. Compteur à roue à ailettes pour mesurer la quantité d'un liquide s'écoulant par un conduit, en particulier pour mesurer le débit du carburant délivré à un moteur à combustion interne, comprenant

un compartiment (1) à roue à ailettes, parcouru par le liquide et présentant un conduit d'admission (2) ainsi qu'un conduit d'évacuation de ce liquide,

une roue à ailettes logée dans le compartiment,

un circuit pour convertir la vitesse angulaire de la roue à ailettes en un signal proportionnel au débit du liquide, caractérisé par le fait que

en amont du compartiment (1) à roue à ailettes est disposé un pré-compartiment (3) qui possède également un conduit d'admission (4) et un conduit (5) d'évacuation du liquide,

le conduit d'admission du compartiment (1) à roue à ailettes est réalisé sous la forme d'un manchon tubulaire (2) qui dépasse dans le pré-compartiment (3) et est engagé dans celui-ci avec étanchéité aux liquides, en formant un intervalle annulaire (7) entre sa paroi externe et la paroi interne dudit pré-compartiment,

le conduit d'évacuation (5) du pré-compartiment (3) bifurque de ce dernier au voisinage de l'intervalle annulaire (7).

2. Compteur à roue à ailettes selon la revendication 1, caractérisé par le fait que les embouchures du conduit d'admission (4) et du conduit d'évacuation (5) du pré-compartiment (3) dans ce compartiment sont décalées l'une de l'autre observées dans la direction de l'écoulement, et le conduit d'admission (4) est situé au voisinage de l'espace formé entre la face extrême (9) du manchon tubulaire (2) et une paroi (10) du pré-compartiment (3).

3. Compteur à roue à ailettes selon la revendication 1, caractérisé par le fait qu'un rétrécissement de section (8) est prévu dans le conduit d'évacuation (5) du pré-compartiment (3).

4. Compteur à roue à ailettes selon la revendication 1, caractérisé par le fait que le pré-compartiment (3) est monté rotatif sur le manchon tubulaire (2).

5. Compteur à roue à ailettes selon la revendication 1, caractérisé par le fait que le conduit d'admission (4) du pré-compartiment (3) est ménagé dans une région (12) de la paroi du pré-compartiment (3) située à l'opposé de l'orifice d'entrée du manchon tubulaire (2).

6. Compteur à roue à ailettes selon la revendication 1, caractérisé par le fait que le conduit d'aspiration (2) du compartiment (1) à roue à ailettes présente une bague d'assujettissement (13) dont le diamètre externe est égal au diamètre interne du pré-compartiment (3) ; et par le fait que, au voisinage de la zone de contact entre la surface externe de la bague d'assujettissement (13) et la paroi interne du pré-compartiment (3), des évidements (11) autorisant la circulation du liquide sont pratiqués soit dans cette paroi interne, soit dans la bague d'assujettissement.

7. Compteur à roue à ailettes selon la revendication 1, caractérisé par le fait que le compartiment (1) à roue à ailettes et le manchon tubulaire (2) sont réalisés d'un seul tenant.

Fig. 1

Fig. 2